# EUROPÄISCHE PATENTSCHRIFT

(11) **EP 0 579 591 B1**
(45) Veröffentlichungstag und Bekanntmachung des Hinweises auf die Patenterteilung: **02.10.1996**
(21) Anmeldenummer: 93890122.0
(22) Anmeldetag: 17.06.1993
(51) Int. Cl.: C21C 5/38, C21C 5/28, C22B 7/02, C21B 13/12

(54) **Verfahren zum Herstellen einer Metallschmelze**
Process for the production of a metal melt
Procédé pour la production d'une fonte d'acier

(30) Priorität: 16.07.1992 AT 1463/92
(43) Veröffentlichungstag der Anmeldung: 19.01.1994
(73) Patentinhaber: VOEST-ALPINE INDUSTRIEANLAGENBAU GMBH, 4020 Linz (AT); KCT TECHNOLOGIE GmbH, D-22047 Hamburg (DE)
(72) Erfinder: Berger, Harald, Dipl.-Ing. Dr., A-4020 Linz (AT); Steins, Johannes, Dipl.-Ing., A-4210 Gallneukirchen (AT); Klintworth, Klaus, Dipl.-Ing., D-2150 Buxtehude (DE)
(74) Vertreter: Kopecky, Helmut, Dipl.-Ing. Kopecky & Schwarz Patentanwälte

(56) Entgegenhaltungen:
- EP-A- 0 010 647
- DE-A- 2 412 887
- US-A- 3 948 644
- US-A- 4 080 195
- STAHL UND EISEN. Bd. 109, Nr. 7, 10. April 1989, DUSSELDORF DE Seiten 355 - 358 , XP000024384 H.G.GECK ET AL. 'Einblasen von Filterstäuben in Konverter mit Bodendüsen am Beispiel der Georgsmarienhütte'

## Beschreibung

Die Erfindung betrifft ein Verfahren zum Herstellen einer Metallschmelze, insbesondere einer Stahlschmelze, in einem metallurgischen Gefäß, wie einem Elektro-Lichtbogenofen oder einem Konverter, unter Verarbeitung von bei der Metallschmelzenherstellung, insbesondere bei der Stahlerzeugung, anfallenden Filterstäuben, sowie eine Anlage zur Durchführung des Verfahrens.

Bei der Herstellung von Metallschmelzen, wie von flüssigem Rohstahl in einem Lichtbogenofen oder in einem Konverter, fallen beträchtliche Mengen von Filterstaub (ca. 15 kg/t Rohstahl) an, deren Entsorgung zunehmend zu einem Problem wird. Einerseits werden die Deponiemöglichkeiten immer weiter eingeschränkt, andererseits sind zum Brikettieren von Filterstaub zu einsatzfähigen Briketts äußerst hohe Aufwendungen bezüglich Anlagen und Einrichtungen sowie an Energie notwendig.

Filterstäube enthalten im Gegensatz zu Erzen oder Oxiden zum Teil erhebliche staubförmige metallische Anteile, die zu Oxidation unter Wärmeentwicklung neigen. Dieser metallische Anteil ist im Filterstaub sehr fein verteilt und kann deswegen heftige explosionsartige Reaktionen auslösen.

Es ist intern bekannt, bei der Stahlherstellung sich bildende Filterstäube mit Hilfe eines Inertgases durch Hohlelektroden in einen Elektro-Lichtbogenofen zur Herstellung von Stahl einzubringen. Hierbei hat sich jedoch gezeigt, daß eine Verwertung der Filterstäube, d.h. deren Verarbeitung zu Stahl, nicht möglich ist und die Filterstäube den Elektro-Lichtbogenofen mehr oder weniger unverändert wieder verlassen, so daß die aus den Filterstäuben resultierende Belastung der Umwelt nahezu unverändert weiter besteht

Die Erfindung bezweckt die Vermeidung dieser Nachteile und Schwierigkeiten und stellt sich die Aufgabe, ein Verfahren der eingangs beschriebenen Art zu schaffen, mit dem es möglich ist, bei der Metallschmelzenherstellung anfallende Filterstäube, insbesondere bei der Stahlherstellung entstehende Filterstäube, ohne jede Umweltbelastung zu verwerten, wobei der Metallgehalt der Filterstäube der Metallerzeugung zugute kommt.

Diese Aufgabe wird erfindungsgemäß dadurch gelöst, daß die Filterstäube mit Hilfe von Erdgas oder von in der Hauptsache gasförmige Kohlenwasserstoffe enthaltendem Mischgas als pasförmiges Fördermedium in das metallurgische Gefäß gefördert werden, wobei die Filterstäube unter Verweidung eines Falschluftzutrittes in einem geschlossenen System dem metallurgischen Gefäß zugeführt und mit Hilfe des Trägergases reduziert und sodann aufgeschmolzen werden.

Der besondere Effekt des erfindungsgemäßen Verfahrens ist darin zu sehen, daß infolge der Führung (Lagerung, Transport, Einblasen) der Filterstäube in einem geschlossenen System - unter Vermeidung von Falschluftzutritt - explosionsartige Reaktionen mit Sicherheit vermieden werden können. Ein weiterer wesentlicher Vorteil des erfindungsgemäßen Verfahrens ist darin zu sehen, daß die oxidischen Bestandteile der Filterstäube durch das Erdgas als reines Reduktiongas unmittelbar nach dem Einbringen in das metallurgische Gefäß, also unmittelbar an der Eintrittsstelle, in einer sehr kurzen Zeitspanne reduziert werden. Bei einem Einblasen eines Kohle-Staub-Gemisches mit Hilfe eines inerten Gases muß zuerst aus der Kohle CO als Reduktionsgas gebildet werden, wofür die Verweilzeit der eingeblasenen Filterstäube in den heißen Zonen des metallurgischen Gefäßes, also beispielsweise im Lichtbogen, nicht ausreicht Aus diesem Grund bleiben die Filterstäube bei bekannten Verfahren unreduziert und werden als solche im unveränderten Zustand wieder abgesaugt

Aus der US-A - 3,948,644 ist die Rückführung von aus einem Konverter austretenden Staub in denselben bekannt, wobei der Staub nach dem Abfiltern und Trocknen mit Hilfe eines Frischgases (Sauerstoff) in den Konverter über dessen Boden eingebracht wird. Gleichzeitig mit dem aus dem Konverter austretenden Staub kann noch Filterstaub von anderen Quellen in den Konverter eingebracht werden.

Aus der EP-A - 0 010 647 ist ein Schmelzaggregat bekannt, dem über einen in diesem eingesetzten Reduktionsschacht Eisenerzstaub zusammen mit einem H₂-reichen Gasgemisch zugeführt wird, wobei das Eisenerz im Reduktionsschacht zu metallischem Eisen reduziert wird. Zur Vorbeugung von Explosionen muß eine Gasdichtheit aller Anlagenteile gewährleistet sein.

Nach einer bevorzugten Ausführungsform der Erfindung werden die Filterstäube in den Lichtbogen einer Graphitelektrode durch eine zentrale Längsausnehmung der Graphitelektrode mittels des Trägergases eingebracht. Hierbei kommt es bei Austritt des Erdgases an der Elektrodenspitze durch dessen Crackung zu C und H₂ auch zu einer Kühlwirkung am Austrittsfleck, so daß der Elektrodenspitzenabbrand minimiert werden kann. Das im Lichtbogen aus dem Erdgas gebildete CO und H₂ verbrennt mit der innerhalb des metallurgischen Gefäßes befindlichen Falschluft, wodurch es zu einem zusätzlichen Energieeintrag durch das Erdgas kommt

Zweckmäßig werden die Filterstäube in eine auf der Schmelze liegende Schaumschlacke geblasen. Hierbei laufen die entsprechenden Reduktions- und Aufschmelzreaktionen in der Schaumschlacke ab. Bei diesem Prozeß spaltet sich das CH₄ unter der thermischen Einwirkung in seine Bestandteile C und H, wobei diese jedoch zunächst von der Schaumschlacke aufgenommen werden. C und H verbinden sich mit dem O der schmelzflüssigen Oxide in der Schlacke, wobei CO und H₂O gasförmig entweichen und das Schäumen der Schlacke bewirken.

Aus der DE-A - 2 132 666 ist es bekannt, zur Gewinnung von Metallen, insbesondere Stahl, aus Erzen, und Mangan aus Manganoxid oder Ferromangan aus Manganerzen, Erze bzw. Metalloxide gemeinsam mit reduzierenden Gasen durch die Brennsäule des Lichtbogens zu führen, was für Filterstäube infolge der latenten Explosionsgefahr jedoch nicht in Betracht kommt

Eine weitere vorteilhafte Ausführungsform ist dadurch gekennzeichnet, daß die Filterstäube mit Hilfe des gasförmigen Fördermediums über mindestens eine Unterbaddüse in das metallurgische Gefäß eingebracht werden. Beim Einsatz von Unterbaddüsen wirkt das Erdgas ebenfalls als unmittelbares Reduktionsgas und gleichzeitig auch als Kühlmedium für die Unterbaddüsen.

Vorteilhaft ist das gasförmige Fördermedium in der Hauptsache aus Erdgas oder anderen gasförmigen Kohlenwasserstoffen sowie aus Stickstoff und/oder Argon zusammengesetzt, wobei das Mischgas zweckmäßig zu etwa 80 % von Erdgas gebildet ist

Mit dem erfindungsgemäßen Verfahren gelingt es, Filterstäube in einer Menge zwischen 20 und 200 kg/min in das metallurgische Gefäß einzubringen.

Das gasförmige Medium wird vorteilhaft mit einem Druck bis zu etwa 20 bar beaufschlagt und zweckmäßig pro Kubikmeter im Normalzustand mit bis zu 30 kg Filterstäuben beaufschlagt

Eine Anlage zur Durchführung des erfindungsgemäßen Verfahrens ist durch folgende Merkmale gekennzeichnet:
- ein metallurgisches Gefäß zum Herstellen einer Metallschmelze,
- eine Entstaubungseinrichtung, die mit dem metallurgischen Gefäß über eine Abgasleitung verbunden ist und einen Staubsammelsilo aufweist,
- ein Druckeinblasgefäß, welches vom Staubsammelsilo mit über eine Leitung zugeführten Filterstäuben versorgt ist,
- eine Staubförderleitung zur Förderung der Filterstäube in das metallurgische Gefäß,
- eine in die Staubförderleitung mündende Erdgas-Zuleitung oder eine gasförmige Kohlenwasserstoffe in die Staubförderleitung zuführende Zuleitung,
- mindestens eine Elektrode mit einer zentralen Längsausnehmung, in die die Staubförderleitung einmündet, und/oder mindestens eine Unterbaddüse, in die die Staubförderleitung einmündet, wobei das metallurgische Gefäß mit der Entstaubungseinrichtung, dem Druckeinblasgefäß, der Staubförderleitung und der Elektrode ein geschlossenes System bildet.

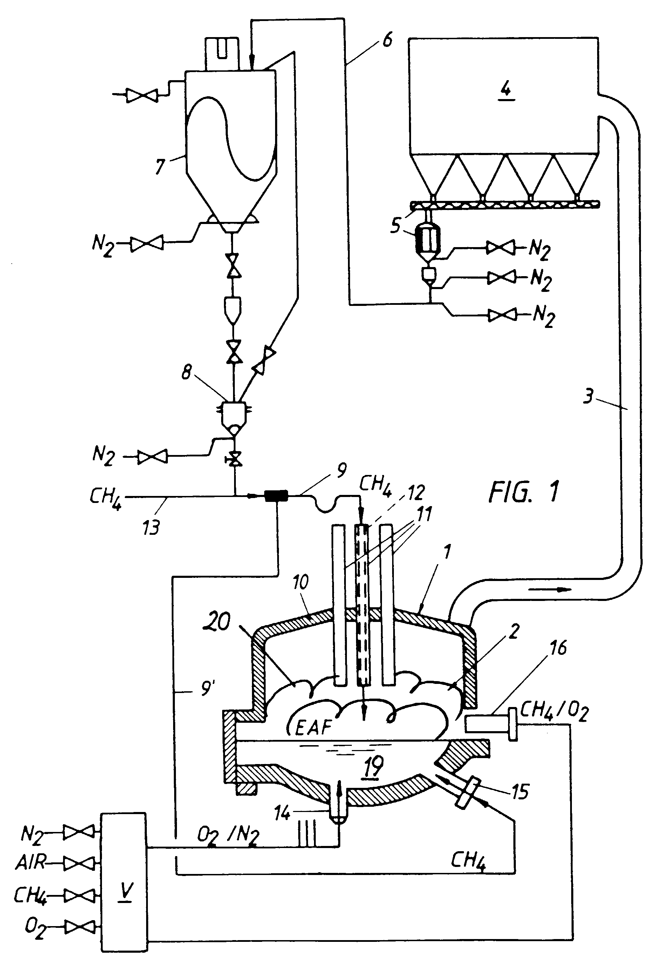

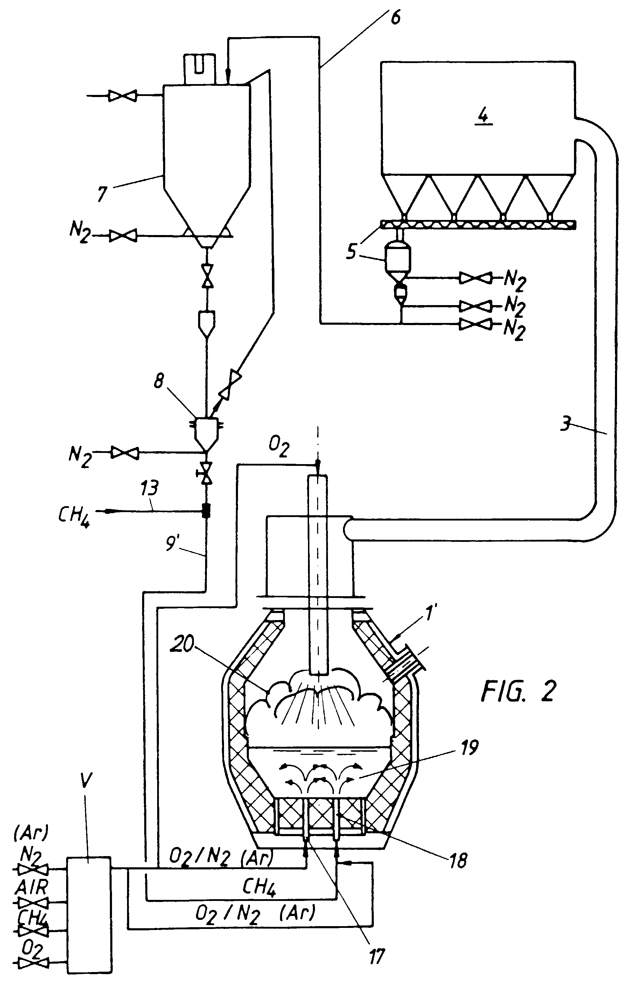

Die Erfindung ist nachfolgend anhand zweier Ausführungsbeispiele näher erläutert, wobei Fig. 1 die Einbringung von Filterstäuben in einen Elektro-Lichtbogenofen in schematischer Darstellung veranschaulicht; Fig. 2 betrifft in zu Fig. 1 analoger Darstellung die Einbringung von Filterstäuben in einen Stahlwerks-Konverter.

Aus einem der Stahlherstellung dienenden Elektro-Lichtbogenofen 1 wird das sich in dessen Innenraum 2 bildende Abgas über eine Abgasleitung 3 einer Trockenfilteranlage 4 einer Entstaubungseinrichtung zugeführt. Der sich in der Trockenfilteranlage absetzende Staub wird pneumatisch mit Stickstoff über einen Zwischentransport 5 über eine Leitung 6 zu einem Staubsammelsilo 7 gefördert, der unter Stickstoffatmosphäre steht. Die Filterstäube fallen aus dem Staubsammelsilo 7 in ein darunter befindliches Druck-Einblasgefäß 8, das ebenfalls mit Stickstoff beaufschlagt wird, u.zw. in der Größenordnung von etwa 20 bar.

Von dort gelangen die Filterstäube über eine Staubförderleitung 9 zu mindestens einer der den Deckel 10 des Elektro-Lichtbogenofens 1 durchragenden Graphitelektroden 11, die als Hohlelektrode mit einer zentralen Längsausnehmung 12 ausgebildet ist. Als gasförmiges Fördermedium zur Förderung der Filterstäube vom Druck-Einblasgefäß 8 durch die Hohlelektrode 11 in das Innere des Elektro-Lichtbogenofens 1 dient über eine Zuleitung 13 zugeführtes Erdgas.

Der Erdgasdruck in der Staubförderleitung 9 kann bis zu 20 bar betragen. Pro Nm³ CH₄ können bis zu 30 kg Staub gefördert werden, was einem Erdgasverbrauch von ca. 1 Nm³/t flüssigem Rohstahl entspricht. Als Einblasrate können vorzugsweise 20 bis 200 kg Staub pro Minute und Elektrode 11 angesetzt werden, doch kann die erforderliche Einblasrate grundsätzlich entsprechend Staubanfall und Ofengröße beliebig ausgelegt werden. Der Leitungsquerschnitt und Querschnitt der Ausnehmung 12 sind abhängig von der einzublasenden Staubmenge.

Der Vorteil der Erfindung im Falle des Einsatzes von Hohlelektroden ist, daß die oxidischen Bestandteile der Filterstäube im Lichtbogen durch das Erdgas, das im Lichtbogen unmittelbar in C → CO und H₂ als reine Reduktionsgase gecrackt wird, nach Eintritt in auf der Schmelze 19 liegende Schaumschlacke 20 sofort reduziert werden.

Als weiterer Vorteil kommt die Kühlwirkung des Erdgases beim Austritt an der Austrittsstelle an der Elektrodenspitze hinzu sowie die Möglichkeit zusätzlichen Energieeintrages durch das Verbrennen von C bzw. CO und H₂ mit im Ofen befindlicher Falschluft im Lichtbogen.

Wie aus Fig. 1 ersichtlich ist, weist der Elektro-Lichtbogenofen 1 neben einer herkömmlichen Bodenspüldüse 14 noch mindestens eine weitere Unterbaddüse 15 auf, durch die ebenfalls Filterstäube mit Hilfe des Erdgases in das Bad eingebracht werden können, u.zw. über die Staubförderleitung 9'.

In den Oberteil des Elektro-Lichtbogenofens 1 sind weiters ein oder mehrere Gas-Sauerstoff-Nachverbrennungsbrenner-Lanzen 16 zur Nachverbrennung von CO eingesetzt, die von einer Ventilstation V mit O_{2,} CH₄, N₂ und Luft versorgt werden, wobei die Zusammensetzung dieser Gase nach den gewünschten Betriebsverhältnissen einstellbar ist.

Gemäß der in Fig. 2 dargestellten Ausführungsform ist als metallurgisches Gefäß ein Stahlwerkskonverter 1' vorgesehen, der mit Bodendüsen 17, 18 ausgestattet ist. Über eine oder mehrere der Bodendüsen 18 werden in der zuvor beschriebenen Weise, d.h. mit Erdgas als Trägergas oder einem aus Erdgas und Stickstoff und/oder Argon gebildeten Mischgas, Filterstäube in die Schmelze 19 eingeleitet. Auch hier wirkt das Erdgas als unmittelbares Reduktionsgas und gleichzeitig als Kühlmedium.

Die Vorteile des erfindungsgemäßen Verfahrens sind insbesondere darin zu sehen:
- Führung der Filterstäube in einem von der Außenwelt vollständig abgeschlossenen System von der Abscheidung im Filter 4 bis zum Wiedereinbringen in die Schmelze
- Reduktion der oxidischen Filterstäube im Lichtbogen und Verbesserung des Ausbringens
- Einsparungen an Investitionskosten und Energie im Vergleich zu Brikettierverfahren
- Kleine, kompakte Zusatzanlage zum Schmelzaggregat mit geringem Platzbedarf und niedrigen Investitionskosten
- Kühlwirkung des Erdgases beim Austritt aus der Hohlelektrodenspitze führt zu niedrigerem Spitzenverbrauch und damit zu niedrigerem Elektrodenverbrauch
- Energiegewinn durch Verbrennen des Erdgases mit im metallurgischen Gefäß 1, 1' vorhandener Falschluft im Lichtbogen.

Mit Hilfe des erfindungsgemäßen Verfahrens bzw. der erfindungsgemäßen Anlage gelingt es, sämtliche in einem Metallherstellungsbetrieb anfallenden Filterstäube effizient zu verwerten, also auch Filterstäube, die in weiteren metallurgischen Gefäßen, die z.B. in einem Stahlwerk zusätzlich vorgesehen sind, anfallen.

## Patentansprüche

1. Verfahren zum Herstellen einer Metallschmelze, insbesondere einer Stahlschmelze, in einem metallurgischen Gefäß (1, 1'), wie einem Elektro-Lichtbogenofen (1) oder einem Konverter (1'), unter Verarbeitung von bei der Metallschmelzenherstellung, insbesondere bei der Stahlerzeugung, anfallenden Filterstäuben, dadurch gekennzeichnet, daß die Filterstäube mit Hilfe von Erdgas oder von in der Hauptsache gasförmige Kohlenwasserstoffe enthaltendem Mischgas als gasförmiges Fördermedium in das metallurgische Gefäß (1, 1') gefördert werden, wobei die Filterstaube unter Verweidung eines Falschluftzutrittes in einem geschlossenen System dem metallurgischen Gefäß (1, 1') zugeführt und mit Hilfe des Trägergases reduziert und sodann aufgeschmolzen werden.

2. Verfahren nach Anspruch 1, dadurch gekennzeichnet, daß die Filterstäube in den Lichtbogen einer Graphitelektrode (11) durch eine zentrale Längsausnehmung (12) der Graphitelektrode (11) mittels des Trägergases eingebracht werden.

3. Verfahren nach Anspruch 2, dadurch gekennzeichnet, daß die Filterstäube in eine auf der Schmelze liegende Schaumschlacke (20) geblasen werden.

4. Verfahren nach einem oder mehreren der Ansprüche 1 bis 3, dadurch gekennzeichnet, daß die Filterstäube mit Hilfe des gasförmigen Fördermediums über mindestens eine Unterbaddüse (15, 18) in das metallurgische Gefäß (1, 1') eingebracht werden.

5. Verfahren nach einem oder mehreren der Ansprüche 1 bis 4, dadurch gekennzeichnet, daß das gasförmige Fördermedium in der Hauptsache aus Erdgas oder anderen gasförmigen Kohlenwasserstoffen sowie aus Stickstoff und/oder Argon zusammengesetzt ist

6. Verfahren nach Anspruch 5, dadurch gekennzeichnet, daß das Mischgas zu etwa 80 % von Erdgas gebildet ist

7. Verfahren nach einem oder mehreren der Ansprüche 1 bis 6, dadurch gekennzeichnet, daß Filterstäube in einer Menge zwischen 20 und 200 kg/min in das metallurgische Gefäß (1, 1') eingebracht werden.

8. Verfahren nach einem oder mehreren der Ansprüche 1 bis 7, dadurch gekennzeichnet, daß das gasförmige Fördermedium mit einem Druck bis zu etwa 20 bar beaufschlagt wird.

9. Verfahren nach einem oder mehreren der Ansprüche 1 bis 8, dadurch gekennzeichnet, daß das gasförmige Fördermedium pro Kubikmeter im Normalzustand mit bis zu 30 kg Filterstäuben beaufschlagt wird.

10. Anlage zur Durchführung des Verfahrens nach einem oder mehreren der Ansprüche 1 bis 9, gekennzeichnet durch die Kombination folgender Merkmale:
• ein metallurgisches Gefäß (1, 1') zum Herstellen einer Metallschmelze,
• eine Entstaubungseinrichtung (4), die mit dem metallurgischen Gefäß (1, 1') über eine Abgasleitung (3) verbunden ist und einen Staubsammelsilo (7) aufweist,
• ein Druckeinblasgefäß (8), welches vom Staubsammelsilo (7) mit über eine Leitung zugeführten Filterstäuben versorgt ist,
• eine Staubförderleitung (9, 9') zur Förderung der Filterstäube in das metallurgische Gefäß (1, 1'),
• eine in die Staubförderleitung (9, 9') mündende Erdgas-Zuleitung (13) oder eine gasförmige Kohlenwasserstoffe in die Staubförderleitung (9, 9') zuführende Zuleitung (13),
• mindestens eine Elektrode (11) mit einer zentralen Längsausnehmung (12), in die die Staubförderleitung (9) einmündet, und/oder mindestens eine Unterbaddüse (15, 18), in die die Staubförderleitung (9') einmündet, wobei das metallurgische Gefäß (1, 1') mit der Entstaubungseinrichtung (4), dem Druckeinblasgefäß (8), der Staubförderleitung (9, 9') und der Elektrode (11) ein geschlossenes System bildet.

## Claims

1. A process for the production of a metal melt, in particular a steel melt, in a metallurgical vessel (1, 1'), such as an electric arc furnace (1) or a converter (1'), by processing filter dusts incurring in the production of metal melt, in particular in the production of steel, characterized in that the filter dusts are conveyed into the metallurgical vessel (1, 1') by aid of natural gas or of a mixed gas primarily containing gaseous hydrocarbons as a gaseous conveying medium, wherein the filter dusts are supplied to the metallurgical vessel (1, 1') in a closed system, avoiding the entry of false air, and are reduced by aid of the carrier gas and then are melted.

2. A process according to claim 1, characterized in that the filter dusts are introduced into the electric arc of a graphite electrode (11) through a central longitudinal passage (12) of the graphite electrode (11) by means of the carrier gas.

3. A process according to claim 2, characterized in that the filter dusts are blown into a foamed slag (20) floating on the melt.

4. A process according to one or several of claims 1 to 3, characterized in that the filter dusts are introduced into the metallurgical vessel (1, 1') by aid of the gaseous conveying medium via at least one immersed nozzle (15, 18).

5. A process according to one or several of claims 1 to 4, characterized in that the gaseous conveying medium essentially is composed of natural gas or other gaseous hydrocarbons as well as of nitrogen and/or argon.

6. A process according to claim 5, characterized in that the mixed gas is composed of natural gas by approximately 80 %.

7. A process according to one or several of claims 1 to 6, characterized in that the filter dusts are introduced into the metallurgical vessel (1, 1') in an amount ranging between 20 and 200 kg/min.

8. A process according to one or several of claims 1 to 7, characterized in that the gaseous conveying medium is set under a pressure of up to about 20 bar.

9. A process according to one or several of claims 1 to 8, characterized in that the gaseous conveying medium is fed with up to 30 kg filter dusts per cubic meter in the normal state.

10. An arrangement for carrying out the process according to one or several of claims 1 to 9, characterized by the combinations of the following characteristic features:
• a metallurgical vessel (1, 1') for producing a metal melt,
• a dedusting means (4), which is connected with the metallurgical vessel (1, 1') via an offgas duct (3) and includes a dust collecting silo (7),
• a pressure blowing vessel (8), which is supplied with filter dusts from the dust collecting silo (7) via a duct,
• a dust conveying duct (9, 9') for conveying the filter dusts into the metallurgical vessel (1, 1'),
• a natural-gas feed duct (13) running into the dust conveying duct (9, 9') or a feed duct (13) feeding gaseous hydrocarbons into the dust conveying duct (9, 9'),
• at least one electrode (11) having a central longitudinal passage (12), into which the dust conveying duct (9) enters, and/or at least one immersed nozzle (15, 18), into which the dust conveying duct (9') enters, the metallurgical vessel (1, 1') forming a closed system with the dedusting means (4), the pressure blowing vessel (8), the dust conveying duct (9, 9') and the electrode (11).

## Revendications

1. Procédé de production d'un bain de fusion, en particulier d'un bain de fusion d'acier, dans un récipient métallurgique (1, 1'), tel qu'un four électrique à arc (1) ou un convertisseur (1'), avec conversion des poussières de filtre qui apparaissent lors de la production du bain de fusion, en particulier lors de la production de l'acier, caractérisé en ce que les poussières de filtre sont transportées dans le récipient métallurgique (1, 1') au moyen de gaz naturel ou d'un mélange gazeux contenant principalement des hydrocarbures gazeux en tant qu'agent de transport gazeux, les poussières de filtre étant introduites dans le récipient métallurgique (1, 1') dans un système clos tandis qu'une introduction d'air parasite est évitée et étant réduites au moyen du gaz porteur puis fondues.

2. Procédé selon la revendication 1, caractérisé en ce que les poussières de filtre sont introduites au moyen du gaz porteur dans l'arc électrique d'une électrode en graphite (11) par un évidement longitudinal central (12) de l'électrode en graphite (11).

3. Procédé selon la revendication 2, caractérisé en ce que les poussières de filtre sont insufflées dans un laitier mousseux (20) situé sur le bain de fusion.

4. Procédé selon une ou plusieurs des revendications 1 à 3, caractérisé en ce que les poussières de filtre sont introduites dans le récipient métallurgique (1, 1') au moyen de l'agent de transport gazeux par l'intermédiaire d'au moins une tuyère située sous le bain (15, 18).

5. Procédé selon une ou plusieurs des revendications 1 à 4, caractérisé en ce que l'agent de transport gazeux consiste principalement en gaz naturel ou en d'autres hydrocarbures gazeux ainsi qu'en azote et/ou en argon.

6. Procédé selon la revendication 5, caractérisé en ce que le mélange gazeux consiste en gaz naturel à raison d'environ 80 %.

7. Procédé selon une ou plusieurs des revendications 1 à 6, caractérisé en ce que les poussières de filtre sont introduites dans le récipient métallurgique (1, 1') en une quantité comprise entre 20 et 200 kg/min.

8. Procédé selon une ou plusieurs des revendications 1 à 7, caractérisé en ce que l'agent de transport gazeux est soumis à une pression qui peut atteindre environ 20 bars.

9. Procédé selon une ou plusieurs des revendications 1 à 8, caractérisé en ce que l'agent de transport gazeux est chargé de jusqu' à 30 kg de poussières de filtre par m³ à l'état normal.

10. Installation pour la mise en oeuvre du procédé selon une ou plusieurs des revendications 1 à 9, caractérisée par la combinaison des caractéristiques suivantes :
- un récipient métallurgique (1, 1') pour produire un bain de fusion,
- un dispositif de dépoussiérage (4) qui est relié au récipient métallurgique (1, 1') par une conduite de gaz usé (3) et qui comporte un silo collecteur de poussières (7),
- un récipient d'insufflation sous pression (8) qui est alimenté par le silo collecteur de poussières (7) en poussières de filtre introduites par une conduite,
- une conduite de transport de poussières (9, 9') pour le transport des poussières de filtre dans le récipient métallurgique (1, 1'),
- une conduite d'introduction de gaz naturel (13) qui débouche dans la conduite de transport de poussières (9, 9') ou une conduite d'introduction (13) qui introduit des hydrocarbures gazeux dans la conduite de transport de poussières (9, 9'),
- au moins une électrode (11) munie d'un évidement longitudinal central (12) dans lequel débouche la conduite de transport de poussières (9), et/ou au moins une tuyère située sous le bain (15, 18) dans laquelle débouche la conduite de transport de poussières(9'), le récipient métallurgique (1, 1') formant un système clos avec le dispositif de dépoussiérage (4), le récipient d'insufflation sous pression (8), la conduite de transport de poussières (9, 9') et l'électrode (11).
